# EUROPEAN PATENT APPLICATION

(11) **EP 4 844 644 A1**
(43) Date of publication of application: **25.11.2026**
(21) Application number: 26158356.1
(22) Date of filing: 13.02.2026
(51) Int. Cl.: G06Q 10/04, G06Q 50/22

(54) **GENERATION SUPPORT DEVICE, GENERATION SUPPORT METHOD, AND GENERATION SUPPORT PROGRAM**

(30) Priority: 21.05.2025 JP 2025084917
(71) Applicant: Hitachi, Ltd., Tokyo 100-8280 (JP)
(72) Inventor: MIYAKOSHI, Misa, Tokyo, 100-8280 (JP); MIYAKOSHI, Junichi, Tokyo, 100-8280 (JP)
(74) Representative: MERH-IP Matias Erny Reichl Hoffmann Patentanwälte PartG mbB

(57) **Abstract**

A generation support device includes a processor and a storage device that stores a directed graph and a question statement template, the processor executes: first acquiring the evaluation attribute; selecting, from the directed graph, a node set that is a combination of the first nodes and the second node connected to the one or more first nodes by the directed edge; first creating a question statement by setting the evaluation attribute and the index indicated by the second node to the question statement template; second creating the indexes indicated by the first nodes as answer items for the question statement, and creating answer options for allowing a respondent to select an answer regarding the evaluation attribute to be used for setting a weight of the directed edge regarding each of the answer items; and first generating of generating a question item by combining the question statement and the answer options.

## Description

### BACKGROUND OF THE INVENTION

### 1. Field of the Invention

The present invention relates to a generation support device, a generation support method, and a generation support program.

### 2. Description of the Related Art

In order to improve social impact in a region, it is important for local residents to autonomously conduct activities and continuously conduct business. When administrator select measures that are easily accepted by the local residents and enable the local residents to act in cooperation, the continuity can be further ensured. The ease of acceptance of the measures by the local residents is affected by human subjective values ("like", "dislike", and the like). Therefore, it is necessary to quantitatively evaluate business that is more needed in the region according to subjective value criteria.

There is a logic model as an index for evaluating how much business affects social impact. The logic model is a directed graph in which the relevance between the social impact and the business is expressed by a unidirectional tree model in which a large number of indexes are expressed as nodes and connections among the indexes are expressed by directed edges. Furthermore, weights are given to the edges in accordance with importance of the indexes, whereby subjective value criteria are reflected.

JP 2018-112659 A discloses that a test program which estimates a comprehension level of a user by expediting a test in a limited test time regardless of a user's degree of perception and proficiency. The test program is a digraph configured of an ark connecting a node to a node including a comprehension degree probability, and includes: model storage means in which a first model in which an item based on a first reference is associated with the node and a second model in which the item based on a second reference is associated with the node are stored; comprehension degree probability updating means for re-calculating a comprehension degree probability in the other node associated with a not-yet-posed problem based on a response of the user to the item for each model; information amount calculating means for calculating a network information amount of all comprehension degree probabilities for each model; and model switching means for switching to the second model when the network information amount is put into a predetermined condition during repeating the comprehension degree updating means and the information amount calculating means on the

### SUMMARY OF THE INVENTION

It is necessary to reflect the weights based on human values to the connections (edges) among the nodes constituting the logic model. As a method for acquiring the human values, there is the world values survey. In the world values research, values obtained by such a survey indicate the directionality of human behavior patterns. However, in the world values survey, it is not possible to set the weights reflecting the human values to the respective edges of the logic model.

A directed graph of JP 2018-112659 A described above is a graph structure in which a weight is given to an edge by a Bayesian network, and the weight of the edge is expressed by a probability (conditional probability) that a subsequent-layer node takes a certain value when a preceding-layer node is set as a condition. Therefore, in JP 2018-112659 A, it is not possible to generate a weight reflecting a human value in each edge of a logic model.

An object of the present invention is to support generation of a weight reflecting a human value.

One aspect of the present invention is a generation support device comprising: a processor configured to execute a program; and a storage device configured to store the program, wherein the storage device stores a directed graph and a question statement template, the directed graph includes one or more nodes in each of a plurality of layers, the nodes including a first node in a preceding layer and a second node in a subsequent layer, the directed graph including a directed edge connected from the first node to one or more of the second nodes, each of the nodes having an index defined regarding an evaluation target in such a manner that the first node and the second node have a causal relationship regarding the evaluation target, the question statement template is a sentence in which the index indicated by the second node and an evaluation attribute of the evaluation target are settable, and the processor executes: first acquisition processing of acquiring the evaluation attribute; selection processing of selecting, from the directed graph, a node set that is a combination of one or more of the first nodes and the second node connected to the one or more first nodes by the directed edge; first creation processing of creating a question statement by setting the evaluation attribute acquired by the first acquisition processing and the index indicated by the second node selected by the selection processing to the question statement template; second creation processing of setting the indexes indicated by the one or more first nodes as answer items for the question statement created by the first creation processing, and creating answer options for allowing a respondent to select an answer regarding the evaluation attribute to be used for setting a weight of the directed edge regarding each of the answer items; and first generation processing of generating a question item by combining the question statement and the answer options created by the second creation processing.

According to the representative embodiment of the present invention, it is possible to support the generation of the weight reflecting the human value. Other objects, configurations, and effects than those described above are clarified by the following description of an embodiment.

### BRIEF DESCRIPTION OF THE DRAWINGS

Fig. 1 is an explanatory diagram illustrating a system configuration example of a generation support system.
FIG. 2 is a block diagram for illustrating a hardware configuration example of each of computers (a generation support device and terminals).
Fig. 3 is an explanatory view illustrating an example of a logic model selection screen.
Fig. 4 is an explanatory view illustrating an example of the question information creation detailed setting screen.
Fig. 5 is an explanatory view illustrating an example of the logic model display screen.
Fig. 6 is an explanatory view illustrating an example of the question target node selection screen.
Fig. 7 is an explanatory view illustrating Answer Option Example 1.
Fig. 8 is an explanatory view illustrating Answer Option Example 2.
Fig. 9 is an explanatory view illustrating Answer Option Example 3.
Fig. 10 is an explanatory view illustrating Answer Option Example 4.
Fig. 11 is an explanatory view illustrating a question statement creation example.
Fig. 12 is an explanatory view illustrating an example of the question item display screen.
Fig. 13 is an explanatory view illustrating an example of the question information display screen.
Fig. 14 is a flowchart illustrating a procedure example of the generation support processing by the generation support device 101.
Fig. 15 is a flowchart illustrating a detailed processing procedure example of the question item generation processing (step S1407) illustrated in Fig. 14.
Fig. 16 is a flowchart illustrating a detailed processing procedure example of the question information generation processing (step S1409) illustrated in Fig. 14.
Fig. 17 is a flowchart illustrating a detailed processing procedure example of the node set exclusion processing (step S1604).
Fig. 18 is an explanatory view illustrating a sensitivity analysis example.
Fig. 19 is a flowchart illustrating a detailed processing procedure example of the source node exclusion processing (step S1609).
Fig. 20 is a flowchart illustrating a processing procedure example of setting of the weight to the edge of the logic model.

### DESCRIPTION OF THE PREFERRED EMBODIMENTS

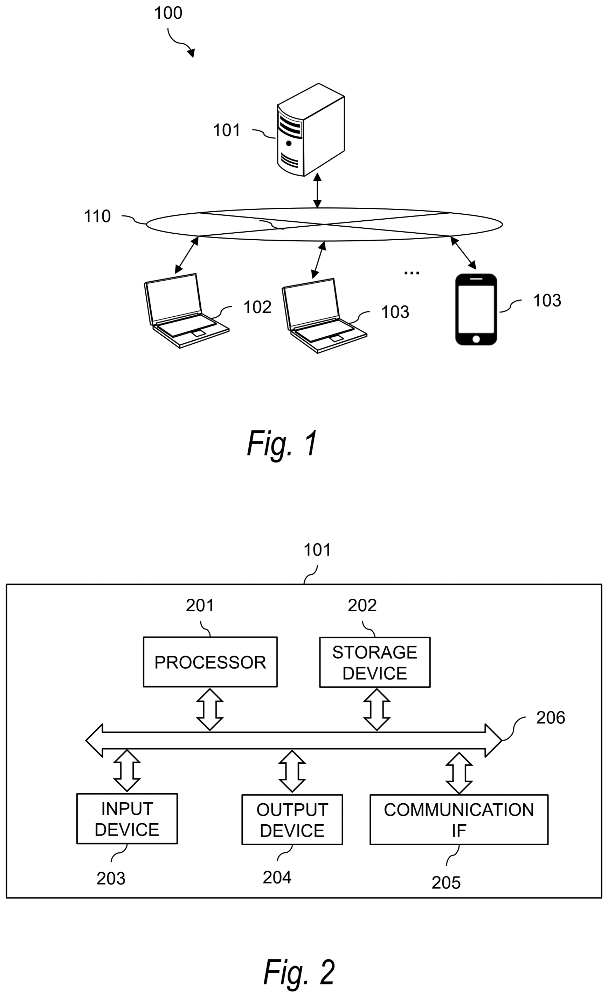

### <Fig. 1 Configuration Example of Generation Support System>

Fig. 1 is an explanatory diagram illustrating a system configuration example of a generation support system. A generation support system 100 includes a generation support device 101 and communication terminals 102 and 103. The generation support device 101 is a computer that executes generation support processing of supporting generation of a weight reflecting a human value to each edge of a logic model. The generation support device 101 and the communication terminals 102 and 103 are communicably connected via a network 110 such as the Internet, a local area network (LAN), or a wide area network (WAN).

The communication terminals 102 and 103 are computers that transmit data input by a user operation to the generation support device 101 via the network 110, and receive and display data from the generation support device 101 via the network 110.

The communication terminal 102 is a computer used by an analyst who generates a question item and/or question information using the generation support device 101. The communication terminal 103 is a computer used by a respondent who receives question information, inputs an answer, and returns, to the generation support device 101, the question information to which the answer has been input.

### < FIG. 2 Hardware Configuration Example of Computers (the generation support device 101, the terminals 102 and 103)>

FIG. 2 is a block diagram for illustrating a hardware configuration example of each of computers (the generation support device 101, the terminals 102 and 103). A computer 200 includes a processor 201, a storage device 202, an input device 203, an output device 204, and a communication interface (communication IF) 205. The processor 201, the storage device 202, the input device 203, the output device 204, and the communication IF 205 are coupled to one another through a bus 206. The processor 201 is configured to control the computer 200. The storage device 202 serves as a work area for the processor 201. The storage device 202 is also a non-transitory or transitory recording medium configured to store various programs and various kinds of data. Examples of the storage device 202 include a read only memory (ROM), a random-access memory (RAM), a hard disk drive (HDD), and a flash memory. The input device 203 is configured to input data. Examples of the input device 203 include a keyboard, a mouse, a touch panel, a numeric keypad, a scanner and a sensor. The output device 204 is configured to output data. Examples of the output device 204 include a display, a printer, and a speaker. The communication IF 205 is coupled to the network 110, and is configured to transmit and receive data.

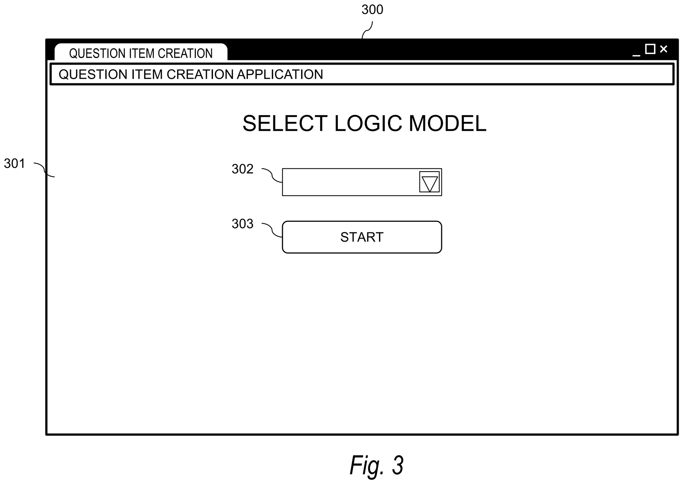

### <Fig. 3 Logic Model Selection Screen>

Fig. 3 is an explanatory view illustrating an example of a logic model selection screen. A window 300 is displayed on a display device that is an example of an output device 204 in a computer 200. In the window 300, a logic model selection screen 301 is displayed. The window 300 and the logic model selection screen 301 are displayed on the display device when a generation support program stored in a storage device 202 is activated.

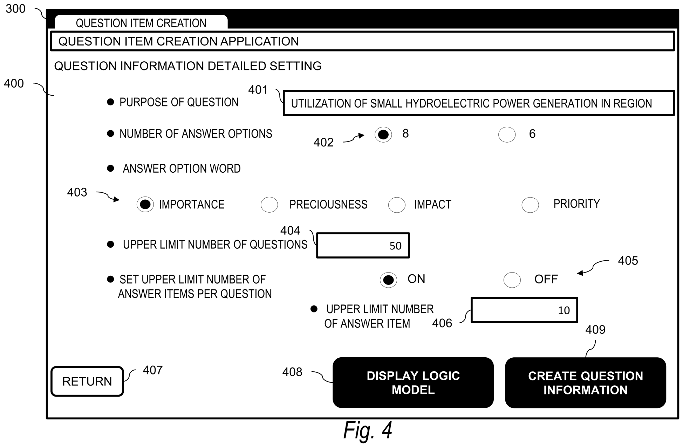

The logic model selection screen 301 includes a file selection pull-down 302 and a start button 303. The file selection pull-down 302 is a user interface that receives selection of a file of a logic model. The start button 303 is a user interface for reading the file of the logic model, selected by the file selection pull-down 302 from the storage device 202, when being pressed and starting execution of the generation support processing. When the start button 303 is pressed, the inside of the window 300 transitions to a question information creation detailed setting screen of Fig. 4.

### <Fig. 4 Question Information Creation Detailed Setting Screen>

Fig. 4 is an explanatory view illustrating an example of the question information creation detailed setting screen. In the window 300, a question information creation detailed setting screen 400 is displayed. The question information creation detailed setting screen 400 includes a question purpose input field 401, a number-of-answer-options selection section 402, an answer option word evaluation attribute selection section 403, an upper-limit-number-of-questions setting section 404, an upper-limit-number-of-answer-items-per-question setting section 405, an upper-limit-number-of-answer-items input section 406, a browser back button 407, a logic model display button 408, and a question information creation button 409.

The question purpose input field 401 is a user interface that receives input of a character string indicating a purpose of a question. Fig. 4 illustrates, as an example, a state in which "utilization of small hydroelectric power generation in a region" is input by an input device 203.

The number-of-answer-options selection section 402 is a user interface that receives selection of the number of answer options. In Fig. 4, as an example, the number-of-answer-options selection section 402 receives selection of either the number of answer options = 8 or the number of answer options = 6 by two radio buttons of "8" and "6". Note that the number of answer options is not limited to six or eight as long as a plurality of answer options are provided.

The answer option word evaluation attribute selection section 403 is a user interface that receives selection of an evaluation attribute of an answer option word. The answer option word is a word indicating an answer option. The evaluation attribute of the answer option word is an attribute for evaluating the answer option word. In Fig. 4, as an example, the answer option word evaluation attribute selection section 403 receives selection of any one of importance, preciousness, impact, and priority by four radio buttons of "importance", "preciousness", "impact", and "priority".

The upper-limit-number-of-questions setting section 404 is a user interface for setting an upper limit number of questions that is an upper limit value of the number of questions. The number of questions is the number of question items to be generated. Fig. 4 illustrates, as an example, a state in which "50" is input by the input device 203. Therefore, the number of question items to be generated is fifty or less.

The upper-limit-number-of-answer-items-per-question setting section 405 is a user interface for setting an upper limit number of answer items per question. The upper limit number of answer items per question is an upper limit value of the number of answer items per question. The number of answer items per question is the number of source nodes N411 in one question item. In Fig. 4, as an example, the upper-limit-number-of-answer-items-per-question setting section 405 receives selection of ON or OFF of upper-limit-number-of-answer-items setting per question by two radio buttons of "ON" and "OFF".

The upper-limit-number-of-answer-items input section 406 is a user interface that receives input of the upper limit number of answer items. The upper limit number of answer items is an upper limit value of the number of answer items per question. Fig. 4 illustrates, as an example, a state in which "10" is input by the input device 203. The value input to the upper-limit-number-of-answer-items input section 406 is applied when the upper-limit-number-of-answer-items-per-question setting section 405 is set to ON. In the example of Fig. 4, the upper limit number of answer items per question is set to "10".

The browser back button 407 is a user interface that returns the inside of the window 300 to the logic model selection screen 301 illustrated in Fig. 3 when being pressed.

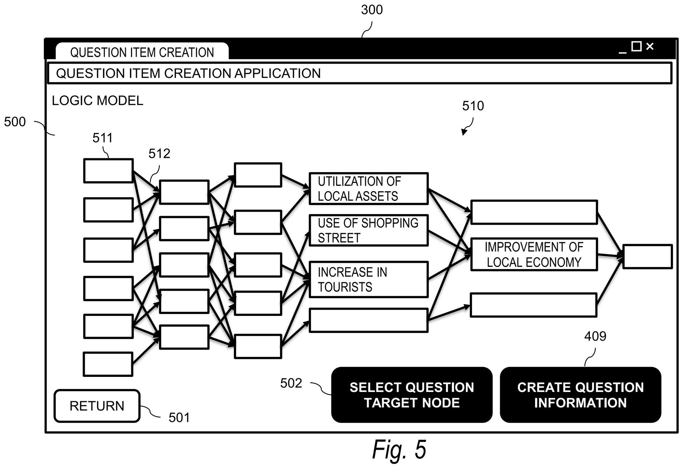

The logic model display button 408 is a user interface for displaying the logic model selected by the file selection pull-down 302 when being pressed. When the logic model display button 408 is pressed, the inside of the window 300 transitions to a logic model display screen of Fig. 5.

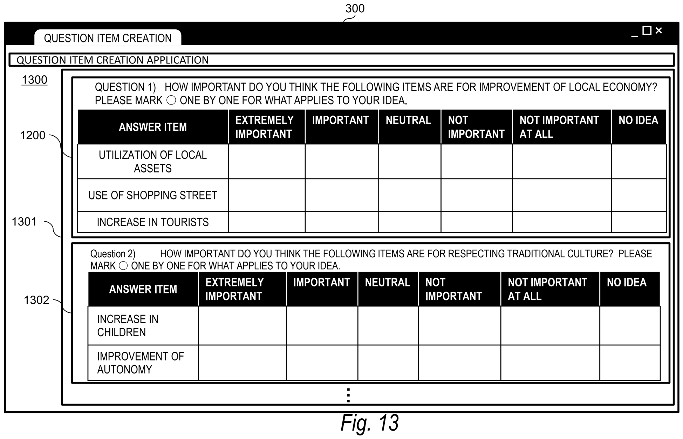

The question information creation button 409 is a user interface for starting execution of question information creation when being pressed. When the question information creation button 409 is pressed, the inside of the window 300 transitions to a question information display screen of Fig. 13. The question information is a set of question items.

Information set by the question purpose input field 401, the number-of-answer-options selection section 402, the answer option word evaluation attribute selection section 403, the upper-limit-number-of-questions setting section 404, the upper-limit-number-of-answer-items-per-question setting section 405, and the upper-limit-number-of-answer-items input section 406 on the question information creation detailed setting screen 400 is referred to as question information creation detailed setting information.

### <Fig. 5 Logic Model Display Screen>

Fig. 5 is an explanatory view illustrating an example of the logic model display screen. In the window 300, a logic model display screen 500 is displayed. On the logic model display screen 500, a logic model 510 selected by the file selection pull-down 302 is displayed.

The logic model 510 is a model indicating a logical network structure for understanding an evaluation target. For example, when the evaluation target is a measure, the logic model is a model indicating a logical network structure that clearly indicates a logical causal relationship until the measure achieves its purpose. That is, there is a causal relationship regarding the evaluation target between a preceding-layer node and a subsequent-layer node connected to the preceding-layer node via a directed edge. Specifically, for example, a cause is an index indicated by the preceding-layer node, and an index indicated by the subsequent-layer node is a result of the cause.

The logic model 510 is expressed by nodes 511 indicated by rectangles and edges 512 indicated by arrows. Furthermore, a vertical column of the nodes 511 indicates a layer. The first layer, the second layer, and so on are defined sequentially formed from a node column at a left end. The terminal layer indicates social impact. The node 511 indicates, for example, an index that is a factor that affects the social impact such as a satisfaction level of a resident. That is, a character string (text data) indicating the index is set in the node 511. The edge 512 indicates a connection between the indexes. Note that the node 511 on a starting end side of the edge 512 is referred to as a source node 511, and the node 511 on a terminal end side (a side with an arrow head) of the edge 512 is referred to as a target node 511.

Furthermore, the logic model display screen 500 includes a browser back button 501, a question target node selection button 502, and a question information creation button 409.

The browser back button 501 is a user interface that returns the inside of the window 300 to the question information creation detailed setting screen 400 illustrated in Fig. 4 when being pressed.

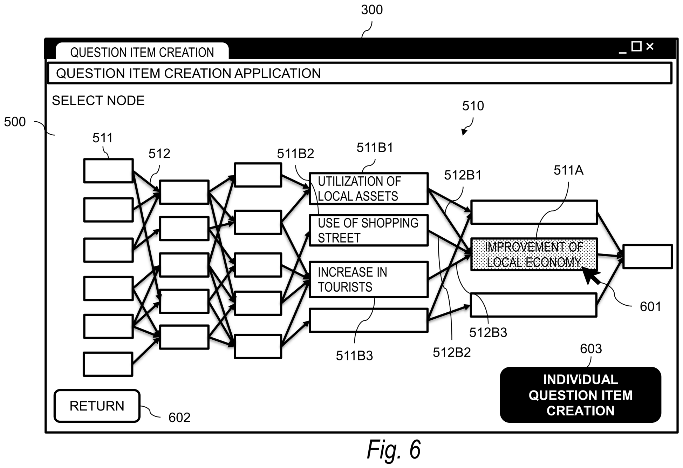

The question target node selection button 502 is a user interface that causes the inside of the window 300 to transition to a question target node selection screen illustrated in Fig. 6 when being pressed.

### <Fig. 6 Question Target Node Selection Screen>

Fig. 6 is an explanatory view illustrating an example of the question target node selection screen. In the window 300, a question target node selection screen 600 is displayed. The question target node selection screen 600 is a screen for individually setting question items. The question item is a combination of a question statement and an answer option table. The question statement is an index indicated by the target node 511. The answer option table is a table in which the source node 511 can be selected from any one of a plurality of answers regarding an answer item.

On the question target node selection screen 600, the logic model 510 is displayed. The node 511 in the logic model 510 is selectable with a cursor 601. The node 511 selected by the cursor 601 is the target node 511 that is a question target. Fig. 6 illustrates a state in which a node 511A indicating an index "improvement of local economy" is selected as the target node 511 that is the question target. In a case where the node 511A is set as the target node 511, the source node 511 is a node 511B1 indicating an index "utilization of local assets", a node 511B2 indicating an index "use of shopping street", and a node 511B3 indicating an index "increase in tourists".

Furthermore, the question target node selection screen 600 includes a browser back button 602 and a question item creation button 603.

The browser back button 602 is a user interface that returns the inside of the window 300 to the logic model display screen 500 illustrated in Fig. 5 when being pressed.

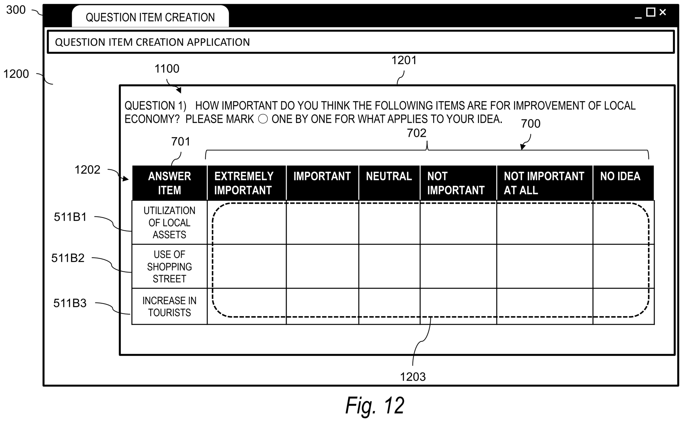

The question item creation button 603 is a user interface that starts execution of question item creation when being pressed. When the question item creation button 603 is pressed, the inside of the window 300 transitions to a question item display screen of Fig. 12.

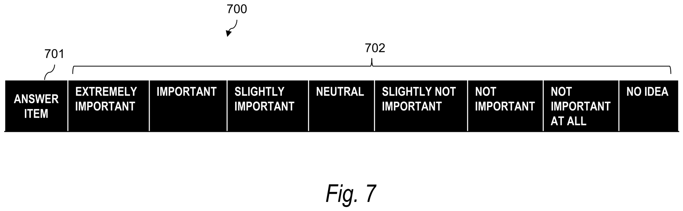

### <Fig. 7 Answer Options: Importance>

Fig. 7 is an explanatory view illustrating Answer Option Example 1. Answer Option Example 1 is answer option information 700 in a case where "8" is selected in the number-of-answer-options selection section 402 of the question information creation detailed setting screen 400 and "importance" is selected in the answer option word evaluation attribute selection section 403.

The answer option information 700 includes an answer item 701 and answer options 702. The answer item 701 is an item for which the answer option 702 is selected, and is specifically, for example, an index indicated by the source node 511.

The answer option 702 is an answer selectable by the respondent for the answer item 701. In Fig. 7, since "8" is selected in the number-of-answer-options selection section 402, eight answer options 702 are set in stages. Furthermore, since "importance" is selected in the answer option word evaluation attribute selection section 403, the answer option 702 is set to an answer regarding the importance.

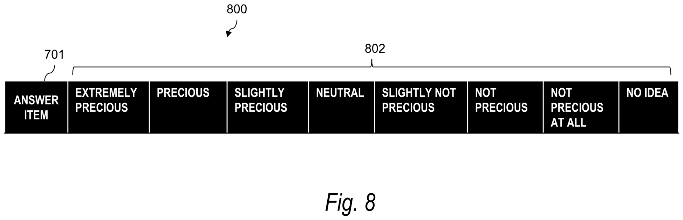

### <Fig. 8 Answer Option: Preciousness>

Fig. 8 is an explanatory view illustrating Answer Option Example 2. Answer Option Example 2 is answer option information 800 in a case where "8" is selected in the number-of-answer-options selection section 402 of the question information creation detailed setting screen 400 and "preciousness" is selected in the answer option word evaluation attribute selection section 403.

The answer option information 800 includes the answer item 701 and answer options 802. The answer option 802 is an answer selectable by the respondent for the answer item 701. In Fig. 8, since "8" is selected in the number-of-answer-options selection section 402, eight answer options 802 are set in stages. Furthermore, since "preciousness" is selected in the answer option word evaluation attribute selection section 403, the answer option 802 is set to an answer regarding the preciousness.

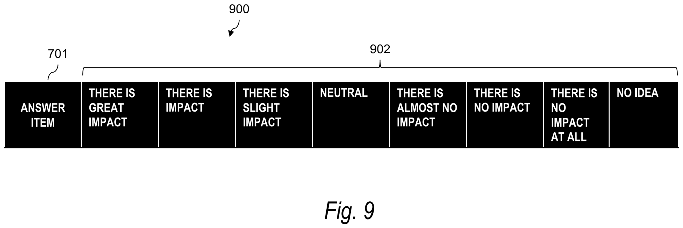

### <Fig. 9 Answer Option: Impact>

Fig. 9 is an explanatory view illustrating Answer Option Example 3. Answer Option Example 3 is answer option information 900 in a case where "8" is selected in the number-of-answer-options selection section 402 of the question information creation detailed setting screen 400 and "impact" is selected in the answer option word evaluation attribute selection section 403.

The answer option information 900 includes the answer item 701 and answer options 902. The answer option 902 is an answer selectable by the respondent for the answer item 701. In Fig. 9, since "8" is selected in the number-of-answer-options selection section 402, eight answer options 902 are set in stages. Furthermore, since "impact" is selected in the answer option word evaluation attribute selection section 403, the answer option 902 is set to an answer regarding the Impact.

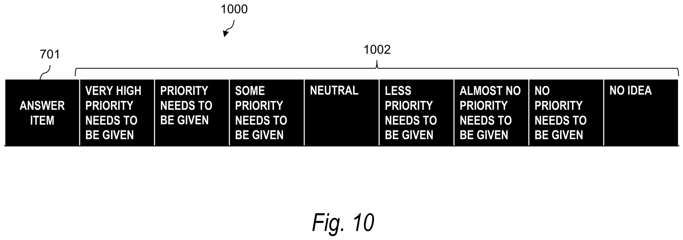

### <Fig. 10 Answer Option: Priority>

Fig. 10 is an explanatory view illustrating Answer Option Example 4. Answer Option Example 4 is answer option information 1000 in a case where "8" is selected in the number-of-answer-options selection section 402 of the question information creation detailed setting screen 400 and "priority" is selected in the answer option word evaluation attribute selection section 403.

The answer option information 1000 includes the answer item 701 and answer options 1002. The answer option 1002 is an answer selectable by the respondent for the answer item 701. In Fig. 10, since "8" is selected in the number-of-answer-options selection section 402, eight answer options 1002 are set in stages. Furthermore, since "priority" is selected in the answer option word evaluation attribute selection section 403, the answer option 1002 is set as an answer regarding the priority.

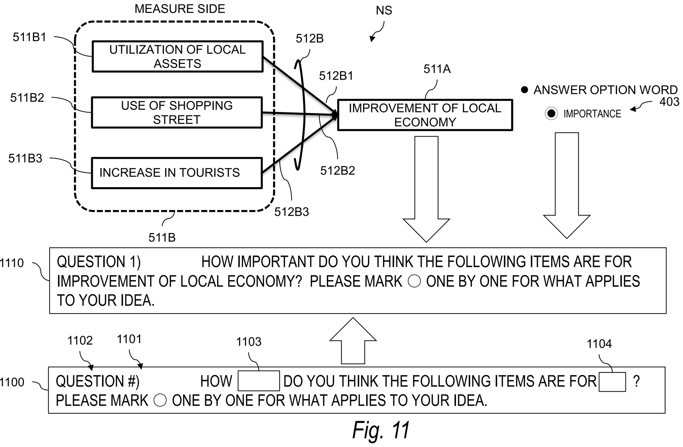

### <Fig. 11 Question Statement Creation Example>

Fig. 11 is an explanatory view illustrating a question statement creation example. Processing illustrated in Fig. 11 is executed when the question item creation button 603 in Fig. 6 is pressed. In Fig. 11, a case where the node 511 for which a question statement 1110 is to be created is the node 511A will be described as an example. Note that a combination of the target node 511A and a source node group 511B is referred to as a node set NS.

A question statement template 1100 is used to create the question statement 1110. The question statement template 1100 includes a fixed phrase 1101, a question number setting section 1102, an index setting section 1103, and an answer option word setting section 1104.

The fixed phrase 1101 is a character string indicating a sentence of a question prepared in advance. The question number setting section 1102 is an area in which a question number is set in ascending order starting from 1. The index setting section 1103 is an area in which a character string indicating an index is set. The answer option word setting section 1104 is an area in which an answer option word is set.

The generation support device 101 reads the question statement template 1100 from the storage device 202. For the n-th question (n is an integer of 1 or more), the generation support device 101 sets "n" in the question number setting section 1102. Fig. 11 illustrates an example in which n = 1.

The generation support device 101 acquires the character string "improvement of local economy" indicating the index from the question target node 511A and sets the character string in the index setting section 1103 of the question statement template 1100. The generation support device 101 sets "importance", selected in the answer option word evaluation attribute selection section 403, in the index setting section 1103 of the question statement template 1100. As a result, the question statement 1110 is generated. The question statement 1110 constitutes a part of a question item.

### <Fig. 12 Question Item Display Screen>

Fig. 12 is an explanatory view illustrating an example of the question item display screen. In the window 300, a question item display screen 1200 is displayed. A created question item 1201 is displayed on the question item display screen 1200. Fig. 12 exemplifies a case where "importance" is selected in the answer option word evaluation attribute selection section 403. In this case, the answer option information 700 is used. Note that the answer option information 800 is used when "preciousness" is selected, the answer option information 900 is used when "impact" is selected, and the answer option information 1000 is used when "priority" is selected.

The question item 1201 is a combination of the question statement 1110 and an answer option table 1202. The answer option table 1202 is a table including the answer option information 700 and the answer items 701. In the answer items 701, character strings indicating the respective indexes of the source nodes 511B1 to 511B3 in a case where the question target node 511A is set as the target node 511 are set.

A set 1203 of blank cells is a blank area in which selection of any one of the answer options 702 is received from the respondent for each of the answer items 701.

### <Fig. 13 Question Information Display Screen>

Fig. 13 is an explanatory view illustrating an example of the question information display screen. In the window 300, a question information display screen 1300 is displayed. Created question information 1301 is displayed on the question information display screen 1300. Fig. 13 exemplifies a case where "importance" is selected in the answer option word evaluation attribute selection section 403. In this case, the answer option information 700 is used. Note that the answer option information 800 is used when "preciousness" is selected, the answer option information 900 is used when "impact" is selected, and the answer option information 1000 is used when "priority" is selected.

The question information 1301 is a set of the question item 1201 and question items 1302, and so on. That is, the question information 1301 is a set of the question items 1201, 1302, and so on created by setting, as the question target node 511, each of nodes 511 of a node group excluding the leftmost nodes 511 in the logic model 510.

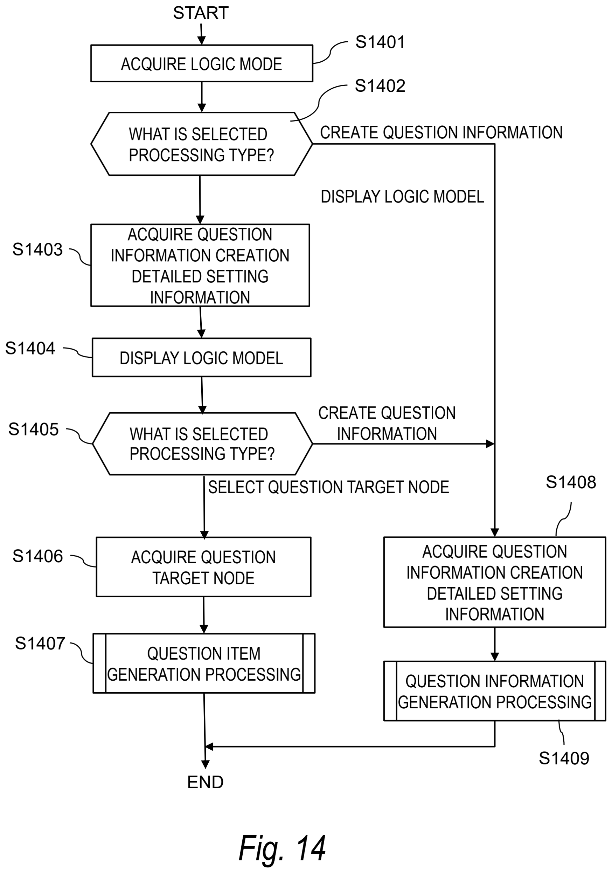

### <Fig. 14 Generation Support Processing>

Fig. 14 is a flowchart illustrating a procedure example of the generation support processing by the generation support device 101. The processing illustrated in Fig. 14 can be executed when the generation support program stored in the storage device 202 is activated.

### (Step S1401)

The generation support device 101 acquires the logic model 510. Specifically, for example, as illustrated in Fig. 3, the generation support device 101 reads a file of the logic model 510 from the storage device 202 by receiving the selection of the logic model 510 in the file selection pull-down 302 and the pressing of the start button 303.

### (Step S1402)

The generation support device 101 determines a processing type selected on the question information creation detailed setting screen 400. Specifically, for example, the generation support device 101 determines which of pressing of the logic model display button 408 and pressing of the question information creation button 409 in the question information creation detailed setting screen 400 illustrated in Fig. 4 is detected. When the pressing of the logic model display button 408 is detected (step S1402: logic model display), the processing proceeds to step S1403. When the pressing of the question information creation button 409 is detected (step S1402: question information creation), the processing proceeds to step S1408.

### (Step S1403)

The generation support device 101 acquires question information creation detailed setting information. Specifically, for example, the generation support device 101 acquires, as the question information creation detailed setting information, information set by the question purpose input field 401, the number-of-answer-options selection section 402, the answer option word evaluation attribute selection section 403, the upper-limit-number-of-questions setting section 404, the upper-limit-number-of-answer-items-per-question setting section 405, and the upper-limit-number-of-answer-items input section 406 on the question information creation detailed setting screen 400.

### (Step S1404)

The generation support device 101 displays the logic model 510. Specifically, for example, the generation support device 101 displays the logic model 510 selected by the file selection pull-down 302 on the logic model display screen 500 illustrated in Fig. 5.

### (Step S1405)

The generation support device 101 determines a processing type selected on the logic model display screen 500. Specifically, for example, the generation support device 101 determines which of the pressing of the question target node selection button 502 and the question information creation button 409 in the logic model display screen 500 illustrated in Fig. 5 is detected. In a case where the pressing of the question target node selection button 502 is detected (step S1405: question target node selection), the processing proceeds to step S1406. When the pressing of the question information creation button 409 is detected (step S1405: question information creation), the processing proceeds to step S1408.

### (Step S1406)

The generation support device 101 acquires a question target node 511 on the question target node selection screen 600. Specifically, for example, the generation support device 101 receives selection of the question target node 511 from the logic model 510 on the question target node selection screen 600, and acquires the selected question target node 511. When the pressing of the question item creation button 603 is detected, the generation support device 101 proceeds to question item generation processing (Step S1407).

### (Step S1407)

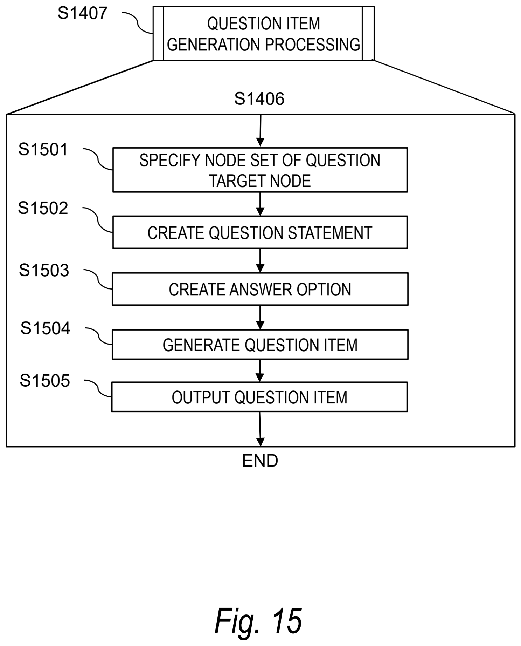

The generation support device 101 executes the question item generation processing and ends the generation support processing. Details of the question item generation processing (step S1407) will be described later with reference to Fig. 15.

### (Step S1408)

Similarly to step S1403, the generation support device 101 acquires question information creation detailed setting information.

### (Step S1409)

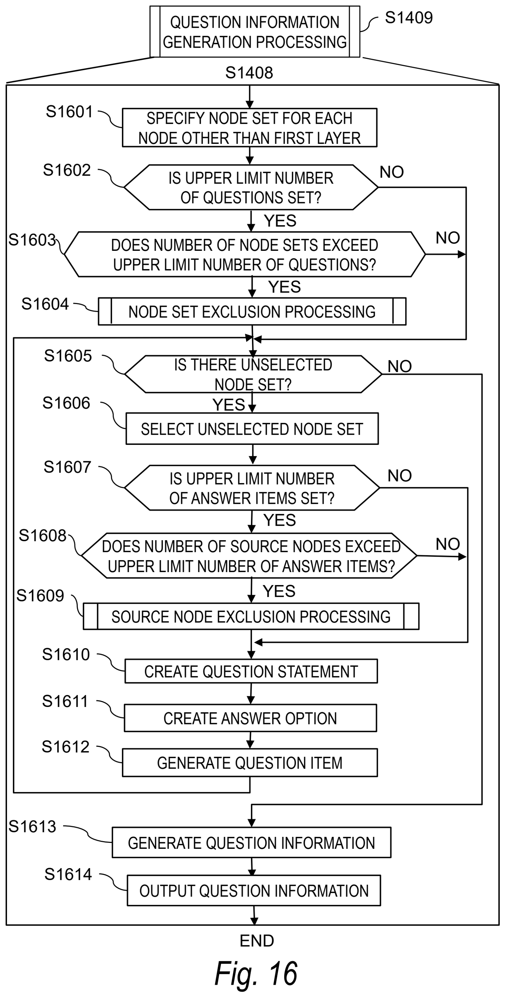

The generation support device 101 executes question information generation processing and ends the generation support processing. Details of the question information generation processing will be described later with reference to Fig. 16.

### <Fig. 15 Question Item Generation Processing (Step S1407)>

Fig. 15 is a flowchart illustrating a detailed processing procedure example of the question item generation processing (step S1407) illustrated in Fig. 14.

### (Step S1501)

The generation support device 101 specifies the node set NS of the question target node 511, that is, a source node group in a case where the question target node 511 is set as a target node. Specifically, for example, as illustrated in Fig. 11, in a case where the question target node 511 is the target node 511A, the generation support device 101 specifies the target node 511A and the source node group 511B connected by an edge group 512B from the logic model 510.

### (Step S1502)

The generation support device 101 creates the question statement 1110. Specifically, for example, as illustrated in Fig. 11, the generation support device 101 sets "n" in the question number setting section 1102 of the question statement template 1100, sets the character string "improvement of local economy" indicating the index of the target node 511A in the index setting section 1103, and sets "importance", selected by the answer option word evaluation attribute selection section 403, in the index setting section 1103. As a result, the question statement 1110 is generated.

### (Step S1503)

The generation support device 101 creates answer options. Specifically, for example, the generation support device 101 creates answer options with an evaluation attribute selected in the answer option word evaluation attribute selection section 403. When the evaluation attribute selected in the answer option word evaluation attribute selection section 403 is "importance", "preciousness", "impact", and "priority", the answer option information 700, the answer option information 800, and the answer option information 900, the answer option information 1000 are created respectively. Hereinafter, the answer option information 700 will be described as an example.

### (Step S1504)

The generation support device 101 generates a question item. Specifically, for example, the generation support device 101 sets, in the answer item 701, a character string indicating an index of each of the source nodes 511B1 to 511B3 of the source node group 511B specified in step S1501. The generation support device 101 connects the answer item 701 and the answer option information 700 to generate the set 1203 of blank cells, thereby generating the answer option table 1202. The generation support device 101 generates the question item 1201 including the question statement 1110 and the answer option table 1202.

### (Step S1505)

The generation support device 101 outputs the question item 1201. Specifically, for example, the generation support device 101 outputs the question item 1201 to the output device 204. When the output device 204 is a display device, the question item display screen 1200 including the question item 1201 is displayed as illustrated in Fig. 12. The display device as a display destination may be the output device 204 of the generation support device 101 or the output devices 204 of the communication terminals 102 and 103. Furthermore, the generation support device 101 may print the question item 1201.

### <Fig. 16 Question Information Generation Processing (Step S1409)>

Fig. 16 is a flowchart illustrating a detailed processing procedure example of the question information generation processing (step S1409) illustrated in Fig. 14.

### (Step S1601)

The generation support device 101 specifies the node set NS for each of the nodes 511 excluding those in the first layer. As described above, the first layer is the vertical node column at the left end of the logic model 510.

### (Step S1602)

The generation support device 101 determines whether the upper limit number of questions is set. Specifically, for example, the generation support device 101 determines whether a numerical value ("50" in the example of Fig. 4) set in the upper-limit-number-of-questions setting section 404 exists in the question information creation detailed setting information. When the upper limit number of questions is set (step S1602: Yes), the processing proceeds to step S1603. When the upper limit number of questions is not set (step S1602: No), the processing proceeds to step S1605.

### (Step S1603)

The generation support device 101 determines whether the number of node sets exceeds the upper limit number of questions. The number of node sets is the number of node sets NS specified in step S1601. When the number of node sets exceeds the upper limit number of questions (step S1603: Yes), the processing proceeds to step S1604. When the number of node sets does not exceed the upper limit number of questions (step S1603: No), the processing proceeds to step S1605.

### (Step S1604)

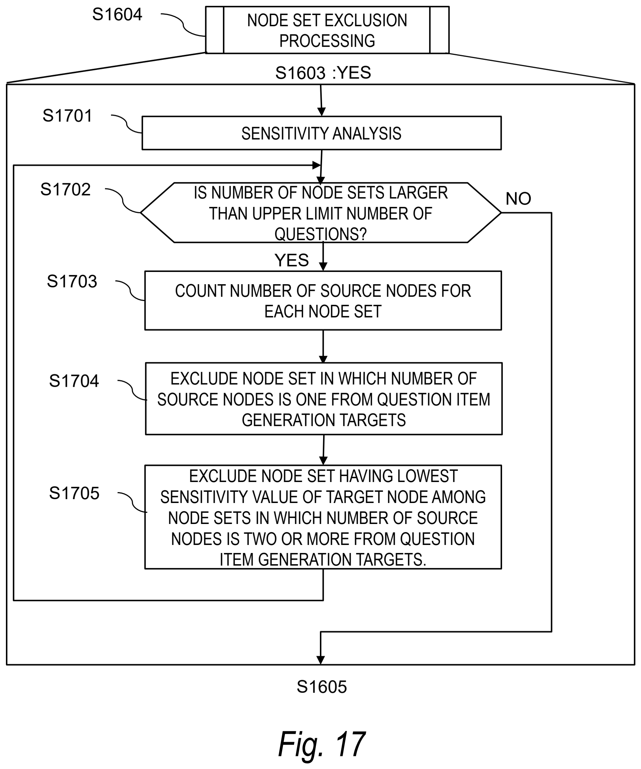

The generation support device 101 executes node set exclusion processing and proceeds to step S1605. The node set exclusion processing (step S1604) is processing for excluding an excess node set from question item generation targets when the number of node sets exceeds the upper limit number of questions (step S1603: Yes). Details of the node set exclusion processing (step S1604) will be described later with reference to Fig. 17.

### (Step S1605)

The generation support device 101 determines whether there is an unselected node set NS. When there is an unselected node set NS (step S1605: Yes), the processing proceeds to step S1606. When there is no unselected node set NS (step S1605: No), the processing proceeds to step S1610. Note that the node set NS excluded from the question item generation targets in the node set exclusion processing (step S1604) is not a selection target in step S1605.

### (Step S1606)

The generation support device 101 selects the unselected node set NS. The node set NS being selected is referred to as a selected node set NS.

### (Step S1607)

The generation support device 101 determines whether the upper limit number of answer items is set. Specifically, for example, the generation support device 101 determines whether the upper-limit-number-of-answer-items-per-question setting section 405 is set to ON and a numerical value ("10" in the example of Fig. 4) set in the upper-limit-number-of-answer-items input section 406 exists in the question information creation detailed setting information. When the upper limit number of answer items is set (step S1607: Yes), the processing proceeds to step S1608. When the upper limit number of answer items is not set (step S1607: No), the processing proceeds to step S1610.

### (Step S1608)

The generation support device 101 determines whether the number of source nodes of the selected node set NS exceeds the upper limit number of answer items. When the number of source nodes of the selected node set NS exceeds the upper limit number of answer items (step S1608: Yes), the processing proceeds to step S1609. When the number of source nodes of the selected node set NS does not exceed the upper limit number of answer items (step S1608: No), the processing proceeds to step S1610.

### (Step S1609)

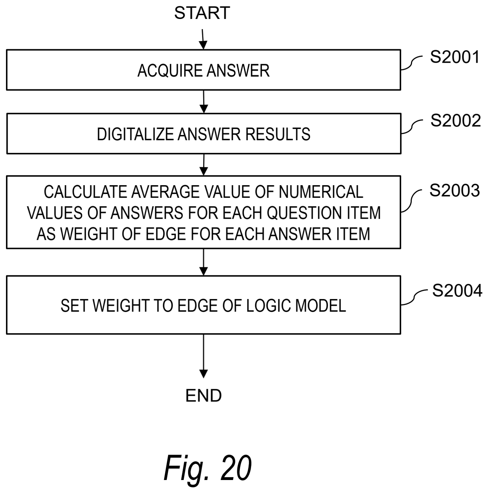

The generation support device 101 executes source node exclusion processing. The source node exclusion processing (step S1609) is processing of reducing the number of source nodes of the selected node set NS such that the number of source nodes of the selected node set NS does not exceed the upper limit number of answer items. Details of the source node exclusion processing (step S1609) will be described later with reference to Fig. 20.

### (Step S1610)

As illustrated in Fig. 11, the generation support device 101 creates the question statement 1110 using the selected node set NS similarly to step S1502.

### (Step S1611)

As illustrated in Fig. 12, the generation support device 101 creates answer options similarly to step S1503.

### (Step S1612)

The generation support device 101 generates the question items 1201 similarly to step S1504, and proceeds to step S1605.

### (Step S1613)

The generation support device 101 generates the question information 1301 by combining all the question items 1201 generated in step S1612.

### (Step S1614)

The generation support device 101 outputs the question information 1301. Specifically, for example, the generation support device 101 outputs the question information 1301 to the output device 204. When the output device 204 is a display device, the question information display screen 1300 including the question information 1301 is displayed as illustrated in Fig. 12. The display device as a display destination may be the output device 204 of the generation support device 101 or the output devices 204 of the communication terminals 102 and 103. Furthermore, the generation support device 101 may print the question information display screen 1300.

### <Fig. 17 Node Set Exclusion Processing (Step S1604)>

Fig. 17 is a flowchart illustrating a detailed processing procedure example of the node set exclusion processing (step S1604).

### (Step S1701)

The generation support device 101 executes sensitivity analysis of the logic model 510 and outputs a sensitivity analysis result. The sensitivity analysis is an analysis method for analyzing the node 511 of the other layers affecting the node 511 (hereinafter, the terminal node 511) of the terminal layer (a node column at a right end of the logic model 510) based on the amount of change in the terminal node 511. The other layers are layers other than the terminal layer. Here, propagation of numerical values in the logic model 510 will be described using the node set NS.

For convenience of description, the source nodes 511B1 to 511B3 of the node set NS will be denoted as nodes N1 to N3, and the target node 511A will be denoted as a node NO. Values of the nodes NO to N3 are set as x0 to x3, respectively. Furthermore, weights of edges 512B1 to 512B3 are set as w1 to w3. Values of w1 to w3 are set to "1". The value x0 of the node N0 is calculated by the following Formula (1).$x 0 = w 1 ⋅ x 1 + w 2 ⋅ x 2 + w 3 ⋅ x 3$ (1)

Note that the number of terms on the right side of the above Formula (1) depends on the number of source nodes. In this manner, the values x1 to x3 of the nodes N1 to N3 are propagated to the value x0 of the node N0.

In step S1701, the sensitivity analysis will be described assuming that the other layer described above is the first layer.

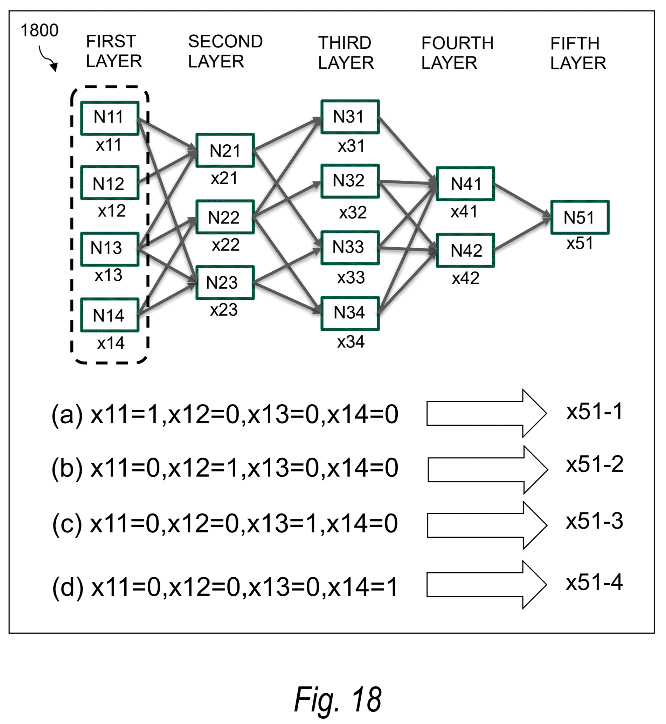

### [Fig. 18 Sensitivity Analysis Example]

Fig. 18 is an explanatory view illustrating a sensitivity analysis example. In Fig. 18, a logic model 1800 includes five layers. The nodes 511 of the first layer are set as nodes N11 to N14, the nodes 511 of the second layer are set as nodes N21 to N23, the nodes 511 of the third layer are set as nodes N31 to N34, the nodes 511 of the fourth layer are set as nodes N41 and N42, and the node 511 of the fifth layer (the terminal layer) is set as a node N51. Furthermore, values of the nodes N11 to N14, N21 to N23, N31 to N34, N41, N42, and N51 are set as x11 to x14, x21 to x23, x31 to x34, x41, x42, and x51, respectively.

The nodes N11 to N14 of the first layer are set as input nodes 511. The values x21 to x23, x31 to x34, x41, x42, and x51 of the second to fifth layers are set to "0". There are the following four patterns in which any one of the values x11 to x14 of the nodes N11 to N14 of the first layer is set to "1" and the remaining three are set to "0".$x 11 = 1 , x 12 = 0 , x 13 = 0 , x 14 = 0$ $x 11 = 0 , x 12 = 1 , x 13 = 0 , x 14 = 0$ $x 11 = 0 , x 12 = 0 , x 13 = 1 , x 14 = 0$ $x 11 = 0 , x 12 = 0 , x 13 = 0 , x 14 = 1$

When each of (a) to (d) is set in the first layer and the values are propagated in the logic model 1800 by calculation as in the above Formula (1), x51-1 to x51-4 are obtained as the value x51 of the node N51. Here, x51-1 to x51-4 denote sensitivity values of the nodes N11 to N14.

Similarly, sensitivity values of the nodes N21 to N23, N31 to N34, N41, and N42 other than the node N51 are obtained in the second layer to the fourth layer. A set of sensitivity values of the nodes N11 to N14, N21 to N23, N31 to N34, N41, and N42 is the sensitivity analysis result obtained in step S1701.

### (Step S1702)

Returning to Fig. 17, the generation support device 101 determines whether the number of node sets of the logic model 510 is larger than the upper limit number of questions set in the upper-limit-number-of-questions setting section 404. When the number of node sets of the logic model 510 is larger than the upper limit number of questions set in the upper-limit-number-of-questions setting section 404 (step S1702: Yes), the processing proceeds to step S1703. When the number of node sets of the logic model 510 is not larger than the upper limit number of questions set in the upper-limit-number-of-questions setting section 404 (step S1702: No), the processing proceeds to step S1605.

### (Step S1703)

The generation support device 101 counts the number of source nodes for each of the node sets NS.

### (Step S1704)

The generation support device 101 excludes, from question item generation targets, the node set NS in which the number of source nodes counted in step S1703 is one. This can prevent generation of the question item 1201 having one answer item 701.

### (Step S1705)

The generation support device 101 excludes, from the question item generation targets, the node set NS having the lowest sensitivity value among the node sets NS having two or more source nodes. As a result, it is possible to prevent creation of the question statement 1110 for the source node 511 having the lowest sensitivity value, that is, the node 511 less likely to affect the node 511 in the terminal layer. Then, the processing proceeds to step S1702.

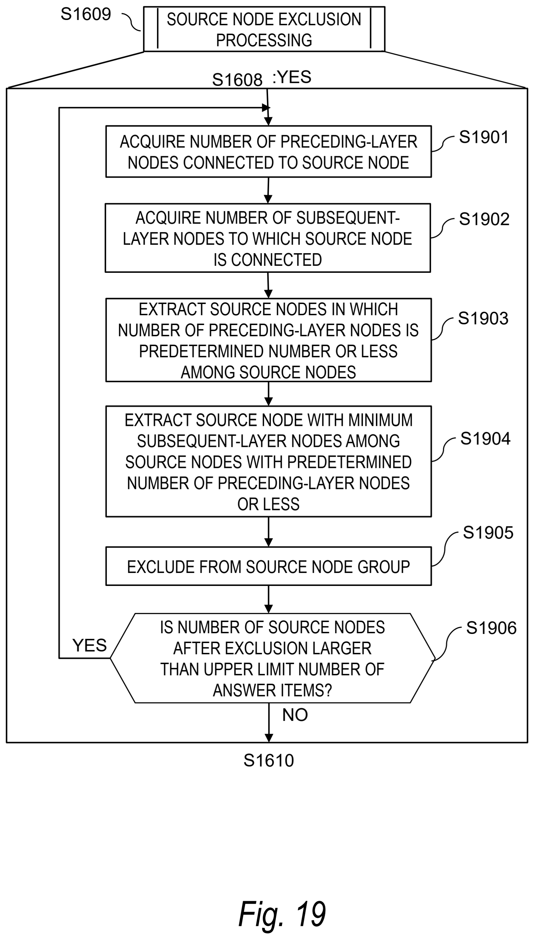

### <Fig. 19 Source Node Exclusion Processing (Step S1609)>

Fig. 19 is a flowchart illustrating a detailed processing procedure example of the source node exclusion processing (step S1609).

### (Step S1901)

The generation support device 101 acquires the number of preceding-layer nodes connected to each of the source nodes 511B1 to 511B3 of the source node group 511B of the selected node set NS in which the number of source nodes exceeds the upper limit number of answer items.

### (Step S1902)

The generation support device 101 acquires the number of subsequent-layer nodes to which each of the source nodes 511B1 to 511B3 of the selected node set NS in which the number of source nodes exceeds the upper limit number of answer items is connected. One of the subsequent-layer nodes is the target node 511A.

### (Step S1903)

The generation support device 101 extracts source nodes of which the number of preceding-layer nodes is equal to or less than a predetermined number from among the source node group 511B of the selected node set NS in which the number of source nodes exceeds the upper limit number of answer items.

### (Step S1904)

The generation support device 101 extracts a source node having the smallest number of subsequent-layer nodes among the source nodes which have been extracted in step S 1903 and of which the number of preceding-layer nodes is equal to or less than the predetermined number.

### (Step S1905)

The generation support device 101 excludes the source node having the smallest number of subsequent-layer nodes extracted in step S1904 from the source node group 511B of the selected node set NS in which the number of source nodes exceeds the upper limit number of answer items.

### (Step S1906)

The generation support device 101 determines whether the number of source nodes of the selected node set NS after the exclusion in step S1905 is larger than the upper limit number of answer items. If the number of source nodes is larger than the upper limit number of answer items (step S1906: Yes), the processing returns to step S1901. If the number of source nodes is not larger than the upper limit number of answer items (step S1906: No), the processing proceeds to step S1610. As a result, the number of source nodes set in the answer item 701 can be reduced to the upper limit number of answer items.

### <Fig. 20 Weight Setting>

Fig. 20 is a flowchart illustrating a processing procedure example of setting of the weight to the edge of the logic model.

### (Step S2001)

The generation support device 101 acquires an answer from the respondent for the question information 1301. In a case where the question information 1301 is distributed to the respondent in a paper medium, input of the answer for the question information 1301 in which the answer has been written is received according to the operation of the input device 203.

In a case where the question information 1301 is transmitted to the communication terminal 103 as an electronic medium, the generation support device 101 receives, from the communication terminal 103, the question information 1301 for which the answer has been written.

Here, the answer is the answer option table 1202 in which "∘" is input to the corresponding portion of the set 1203 of blank cells. In Fig. 12, only one "∘" can be input to one answer item 701.

### (Step S2002)

The generation support device 101 quantifies each of selection results in the answers acquired in step S2001. The selection result is an item of the evaluation attribute selected from among the answer options. Specifically, for example, numerical values are determined at positions of "∘" in the answer options 702, 802, 902, and 1002. For example, when the answer options 702 are given as an example,
"extremely important" is 5,
"important" is 4,
"neutral" is 3,
"not important" is 2, and
"not important at all" is 1.

Furthermore, "no idea" is not quantified and is not included in the population at the time of calculating an average value calculated in step S2003. The same applies to "no answer".

### (Step S2003)

The generation support device 101 calculates an average value of numerical values of answers for each question item as the weight of the edge for each answer item. For example, when the question item 1201 is given as an example, a weight W1 of an edge is calculated if the answer item 701 is "utilization of local assets", a weight W2 of an edge is calculated if the answer item is "use of shopping street", and a weight W3 of an edge is calculated if the answer item is "increase in tourists".

### (Step S2004)

The generation support device 101 sets the weight calculated in step S2003 to the edge of the logic model 510. Specifically, when the node set NS illustrated in Fig. 11 is given as an example, the weight W1 is set to the edge 512B1 for the above-described "utilization of local assets" (index of the source node 511B1), the weight W2 is set to the edge 512B2 for the above-described "use of shopping street" (index of the source node 511B2), and the weight W3 is set to the edge 512B3 for the above-described "increase in tourists" (index of the source node 511B3). In this manner, it is possible to set the weight reflecting the human value on each edge of the logic model 510.

As described above, according to the present embodiment, the generation support device 101 can support the generation of the weight reflecting the human value. Specifically, the generation support device 101 generates the question information including the question item. When the question information is sent to the respondent and the answer from the respondent is obtained, the generation support device 101 can set the weight reflecting the human value to the directed edge of the logic model.

Furthermore, the number of question items can be suppressed to an appropriate number since the respondent tends not to answer if the number of question items is too large. Furthermore, the number of answer items can be suppressed to an appropriate number since the respondent tends not to answer if the number of answer items is too large.

It should be noted that this disclosure is not limited to the above-mentioned embodiments, and encompasses various modification examples and the equivalent configurations within the scope of the appended claims without departing from the gist of this disclosure. For example, the above-mentioned embodiments are described in detail for a better understanding of this disclosure, and this disclosure is not necessarily limited to what includes all the configurations that have been described. Further, a part of the configurations according to a given embodiment may be replaced by the configurations according to another embodiment. Further, the configurations according to another embodiment may be added to the configurations according to a given embodiment. Further, a part of the configurations according to each embodiment may be added to, deleted from, or replaced by another configuration. It is also noted that the set of claims as attached include a preferred example for the dependencies of the claims, while other combinations of independent claims with one or more dependent claims shall also be considered to be disclosed herein as long as these other combinations are technically possible, for example as long as they do not lead to technical contradictions.

Further, a part or entirety of the respective configurations, functions, processing modules, processing means, and the like that have been described may be implemented by hardware, for example, may be designed as an integrated circuit, or may be implemented by software by a processor interpreting and executing programs for implementing the respective functions.

The information on the programs, tables, files, and the like for implementing the respective functions can be stored in a storage device such as a memory, a hard disk drive, or a solid state drive (SSD) or a recording medium such as an IC card, an SD card, or a DVD.

Further, control lines and information lines that are assumed to be necessary for the sake of description are described, but not all the control lines and information lines that are necessary in terms of implementation are described. It may be considered that almost all the components are connected to one another in actuality.

## Claims

1. A generation support device comprising:
a processor configured to execute a program; and
a storage device configured to store the program,
wherein the storage device stores a directed graph and a question statement template,
the directed graph includes one or more nodes in each of a plurality of layers, the nodes including a first node in a preceding layer and a second node in a subsequent layer, the directed graph including a directed edge connected from the first node to one or more of the second nodes, each of the nodes having an index defined regarding an evaluation target in such a manner that the first node and the second node have a causal relationship regarding the evaluation target,
the question statement template is a sentence in which the index indicated by the second node and an evaluation attribute of the evaluation target are settable, and
the processor executes:
first acquisition processing of acquiring the evaluation attribute;
selection processing of selecting, from the directed graph, a node set that is a combination of one or more of the first nodes and the second node connected to the one or more first nodes by the directed edge;
first creation processing of creating a question statement by setting the evaluation attribute acquired by the first acquisition processing and the index indicated by the second node selected by the selection processing to the question statement template;
second creation processing of setting the indexes indicated by the one or more first nodes as answer items for the question statement created by the first creation processing, and creating answer options for allowing a respondent to select an answer regarding the evaluation attribute to be used for setting a weight of the directed edge regarding each of the answer items; and
first generation processing of generating a question item by combining the question statement and the answer options created by the second creation processing.

2. The generation support device according to claim 1, wherein
the processor further executes
first exclusion processing of excluding the index, indicated by the first node corresponding to a predetermined condition among the one or more first nodes, from the answer items, and
in the second creation processing, the processor creates the answer options for the answer item excluded by the first exclusion processing.

3. The generation support device according to claim 2, wherein
in the first exclusion processing, the processor specifies the first node to be excluded based on a number of preceding-layer nodes connected to the first node and a number of subsequent-layer nodes to which the first node is connected, and excludes the index, indicated by the first node to be excluded, from the answer items.

4. The generation support device according to claim 2, wherein
in the first acquisition processing, the processor acquires an upper limit number of the answer items that is an upper limit value of a number of the answer items, and
the processor executes the first exclusion processing when a number of the one or more first nodes exceeds the upper limit number of the answer items.

5. The generation support device according to claim 2, wherein
in the first acquisition processing, the processor acquires an upper limit number of the answer items that is an upper limit value of a number of the answer items, and
the processor repeatedly executes the first exclusion processing until a number of the answer items after the exclusion becomes equal to or less than the upper limit number of the answer items.

6. The generation support device according to claim 1, wherein
the processor
repeatedly executes the selection processing, the first creation processing, the second creation processing, and the first generation processing, and
further executes second generation processing of generating question information including a plurality of the question items obtained by repeatedly executing the first generation processing.

7. The generation support device according to claim 6, wherein
the processor further executes
second exclusion processing of specifying a group of the node sets included in the directed graph and excluding the node set in which a number of the first nodes is one from a selection target in the selection processing.

8. The generation support device according to claim 6, wherein
the processor further executes
second exclusion processing of analyzing sensitivity of the first node in the directed graph, specifying a group of the node sets included in the directed graph, and excluding the node set including the first node having the minimum sensitivity from a selection target in the selection processing, from among the node sets in which a number of the first nodes is two or more in the group of the node sets.

9. The generation support device according to claim 7, wherein
in the first acquisition processing, the processor acquires an upper limit number of questions that is an upper limit number of the question items, and
the processor executes the second exclusion processing when a number of the node sets in the directed graph exceeds the upper limit number of questions.

10. The generation support device according to claim 1, wherein
the processor further executes:
second acquisition processing of acquiring an answer to the question item; and
setting processing of setting the weight to be assigned to the directed edge in the node set as a generation source of the question item based on a selection result included in the answer acquired by the second acquisition processing.

11. The generation support device according to claim 6, wherein
the processor further executes:
second acquisition processing of acquiring an answer to the question item included in the question information as a result of transmitting the question information to a communication terminal of the respondent, the communication terminal being capable of communicating with the generation support device; and
setting processing of setting the weight to be assigned to the directed edge in the node set as a generation source of the question item based on a selection result included in the answer acquired by the second acquisition processing.

12. The generation support device according to claim 1, wherein
the directed graph is a logic model.

13. A generation support method, executed by a generation support device including a processor configured to execute a program and a storage device configured to store the program, wherein
the storage device stores a directed graph and a question statement template,
the directed graph includes one or more nodes in each of a plurality of layers, the nodes including a first node in a preceding layer and a second node in a subsequent layer, the directed graph including a directed edge connected from the first node to one or more of the second nodes, each of the nodes having an index defined regarding an evaluation target in such a manner that the first node and the second node have a causal relationship regarding the evaluation target,
the question statement template is a sentence in which the index indicated by the second node and an evaluation attribute of the evaluation target are settable, and
the processor executes:
first acquisition processing of acquiring the evaluation attribute;
selection processing of selecting, from the directed graph, a node set that is a combination of one or more of the first nodes and the second node connected to the one or more first nodes by the directed edge;
first creation processing of creating a question statement by setting the evaluation attribute acquired by the first acquisition processing and the index indicated by the second node selected by the selection processing to the question statement template;
second creation processing of setting the indexes indicated by the one or more first nodes as answer items for the question statement created by the first creation processing, and creating answer options for allowing a respondent to select an answer regarding the evaluation attribute to be used for setting a weight of the directed edge regarding each of the answer items; and
first generation processing of generating a question item by combining the question statement and the answer options created by the second creation processing.

14. A generation support program causing a processor to execute processing,
the processor being capable of a storage device
the storage device storing a directed graph and a question statement template,
the directed graph including one or more nodes in each of a plurality of layers, the nodes including a first node in a preceding layer and a second node in a subsequent layer, the directed graph including a directed edge connected from the first node to one or more of the second nodes, each of the nodes having an index defined regarding an evaluation target in such a manner that the first node and the second node have a causal relationship regarding the evaluation target, and
the question statement template is a sentence in which the index indicated by the second node and an evaluation attribute of the evaluation target are settable,
the generation support program causing the processor to execute:
first acquisition processing of acquiring the evaluation attribute;
selection processing of selecting, from the directed graph, a node set that is a combination of one or more of the first nodes and the second node connected to the one or more first nodes by the directed edge;
first creation processing of creating a question statement by setting the evaluation attribute acquired by the first acquisition processing and the index indicated by the second node selected by the selection processing to the question statement template;
second creation processing of setting the indexes indicated by the one or more first nodes as answer items for the question statement created by the first creation processing, and creating answer options for allowing a respondent to select an answer regarding the evaluation attribute to be used for setting a weight of the directed edge regarding each of the answer items; and
first generation processing of generating a question item by combining the question statement and the answer options created by the second creation processing.
